# EUROPÄISCHE PATENTSCHRIFT

(11) **EP 2 587 895 B1**
(45) Veröffentlichungstag und Bekanntmachung des Hinweises auf die Patenterteilung: **06.09.2017**
(21) Anmeldenummer: 12189524.7
(22) Anmeldetag: 23.10.2012
(51) Int. Cl.: H05B 37/02

(54) **Steuerungssystem für ein Beleuchtungssystem mit einer Vielzahl von Leuchten**
Control system for a lighting system comprising multiple luminaires
Système de commande d'un éclairage comportant plusieurs lampes

(30) Priorität: 28.10.2011 CH 17422011
(43) Veröffentlichungstag der Anmeldung: 01.05.2013
(73) Patentinhaber: Regent Beleuchtungskörper AG, 4018 Basel (CH)
(72) Erfinder: Marti, Andreas, 4132 Muttenz (CH)
(74) Vertreter: Braun, André jr.

(56) Entgegenhaltungen:
- WO-A2-2010/010493
- GB-A- 2 470 926
- US-A- 5 504 477
- US-A1- 2010 201 267

## Beschreibung

Die Erfindung betrifft ein drahtloses Steuerungssystem für eine Vielzahl von Leuchten, die sich in einer räumlichen Zuordnung zueinander befinden.

Für Beleuchtungsmittel, wie z.B. Stehleuchten, die ihre Hauptanwendung primär im Bürobereich finden und die Beleuchtung am Arbeitsplatz regeln, entstehen im Markt vermehrt Bedürfnisse einzelne Arbeitsplatzleuchten in Gruppen zusammenzufassen, um eine räumliche Beleuchtungseinstellung zu erwirken. Konkret stellt sich ein solches Bedürfnis beispielsweise wie folgt dar: In einem Bürogrossraum befinden sind mehrere Stehleuchten im ganzen Raum verteilt bei den einzelnen Arbeitsplätzen. Bei unbesetztem Büro, z.B. abends oder am Wochenende, sind alle Leuchten ausgeschaltet. Bleibt jedoch die Beleuchtung eines einzelnen Arbeitsplatzes eingeschaltet oder wird sie durch eine Person oder durch einen vorhanden Bewegungsmelder in der Leuchte eingeschaltet, so sollen die benachbarten Leuchten ebenfalls eingeschaltet sein bzw. werden.

Bei einem Beleuchtungssystem mit fest installierten Deckenleuchten lässt sich diese Aufgabe über eine zentrale Steuerung lösen. So sind z.B. unter den Bezeichnungen DALI oder KNX bekannte Systeme auf dem Markt, die auf Bussystemen beruhen und die erhebliche Adressierungs- und Konfigurationsaufwände an den Leuchten oder durch zusätzlich Software/Hilfsmittel erfordern. Beispielsweise beschreibt die US 5,504,477 A ein Überwachungssystem mit einer Vielzahl von fest verkabelten Leuchten, die in einer räumlichen Zuordnung zueinander.

Die WO2010/010493A2 beschreibt den Aufbau eines Netzes von Leuchten um einen automatischen Initialisierungsprozess für ein intelligentes Beleuchtungssystem bereitzustellen. Während des Initialisierungsprozesses werden in einer jeweiligen Leuchte von den benachbarten Leuchten ausgesandte Signale empfangen und dadurch die jeweiligen Abstände ermittelt. Es werden Signalstärke (RSSI) und Time-of-Flight Messverfahren genannt. Anhand der ermittelten Abstände wird in der Leuchte eine Rangfolge bestimmt, wodurch die Leuchte nach der Initialisierung durch das Empfangen weiterer Signale von den benachbarten Leuchten mit einer von der Rangfolge abhängigen Helligkeit einschaltbar ist. Insbesondere bezieht sich die WO2010/010493A2 auf Netzwerke von Außenleuchten und wie Netzwerke von Leuchten in Außenplätzen eingerichtet werden.

Für mobile Leuchten, die ihre Stromversorgung aus den normalen an einem Arbeitsplatz vorhandenen Steckdosen beziehen sollen, sind diese Systeme ungeeignet. Dies gilt ebenfalls für fest installierte Leuchten, bei denen aus Installationssicht eine Zusatzverdrahtung für Steueraufgaben nicht möglich oder nicht vorhanden ist.

Der Erfindung liegt daher die Aufgabe zugrunde, eine Leuchtensteuerung bereitzustellen, die nicht die Nachteile der bekannten kabelgebundenen Systeme aufweist und sich vor allem, aber nicht ausschliesslich, für mobile Leuchten eignet.

Erfindungsgemäss wird diese Aufgabe dadurch gelöst, dass jede Leuchte eines Beleuchtungssystems mit einer Sende- und Empfangseinrichtung versehen ist und die Sendeeinrichtung einer eingeschalteten Leuchte Signale aussendet, aufgrund deren die Empfangseinrichtung der anderen Leuchten des Systems ihre Entfernung von der eingeschalteten Leuchte ermitteln und sich mit einer von der ermittelten Entfernung abhängigen Beleuchtungseinstellung, z.B. Helligkeit, Farbtemperatur des Lichts, tageszeitabhängige Beleuchtungsveränderung etc. einschalten bzw. einstellen.

Im Folgenden werden anhand der beiliegenden Zeichnungen bevorzugte Ausführungsbeispiele der Erfindung beschrieben. Es zeigen:
- Fig.1: eine schematische perspektivische Darstellung einer Bürosituation mit einer Vielzahl von Arbeitsplätzen
- Fig.2: eine einzelne Leuchte mit einem Kommunikationsmodul
- Fig.3: ein Blockdiagramm eines Kommunikationmoduls
- Fig.4: eine schematische Darstellung der Kommunikation zwischen zwei Leuchten

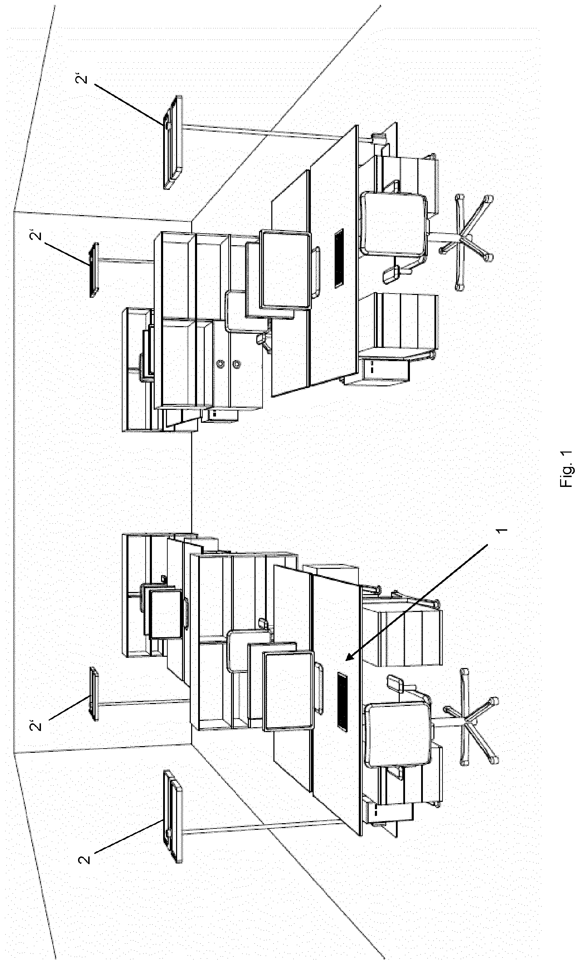

Wie schematisch in Fig. 1 gezeigt befindet sich in einem Grossraumbüro mit einer Vielzahl von Arbeitsplätzen an jedem Arbeitsplatz eine Stehleuchte. Wenn zu einer Zeit, zu der das Beleuchtungssystem an sich ausgeschaltet ist, also z.B. spät abends oder am Wochenende, an dem im Vordergrund gezeigten Arbeitsplatz 1 die Arbeit aufgenommen wird, schaltet der Arbeitende oder ein Präsenzmelder die zugehörige Leuchte 2 ein oder stellt sie auf ein gewünschtes Beleuchtungsverhalten ein. Zur Herstellung einer angenehmen Beleuchtungssituation wird die Umgebung des Arbeitsplatzes 1 ebenfalls beleuchtet, d.h. also die Leuchten 2' der umliegenden Arbeitsplätze werden ebenfalls eingeschaltet, und zwar mit geringerer, vorzugsweise mit der Entfernung auslaufender Helligkeit.

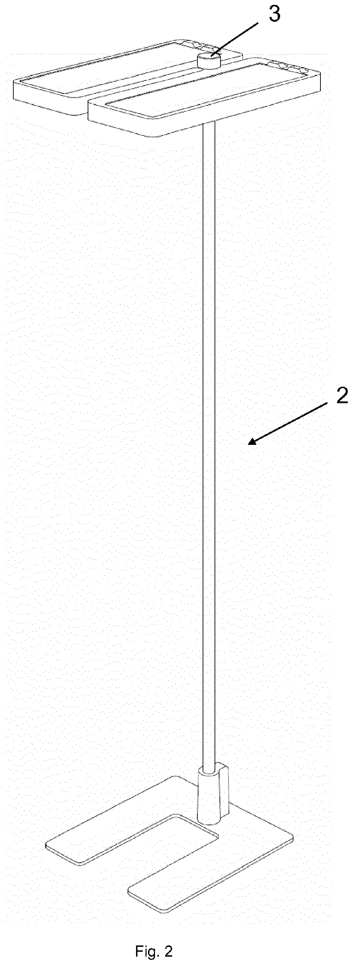

Die in Fig. 2 gezeigte Leuchte 2 ist mit einem Kommunikationsmodul 3 versehen, der auf der Oberseite der Leuchte angebracht ist. Das Kommunikationsmodul 3 enthält eine Sende- und Empfangseinrichtung 4, mittels der Signale mit einem Sendebereich von 360° in den Raum ausgesendet und von anderen Leuchten ausgesendete Signale empfangen werden.

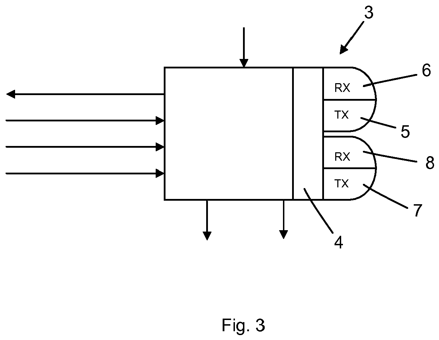

Wie in Fig. 3 gezeigt, enthält die Sende- und Empfangseinrichtung 4 einen optischen Sender 5 und einen optischen Empfänger 6, basierend auf sichtbarer oder unsichtbarer Lichtübertragung (sichtbares Licht, Infrarot, Ultraviolett) sowie einen Ultraschallsender 7 und einen Ultraschallempfänger 8.

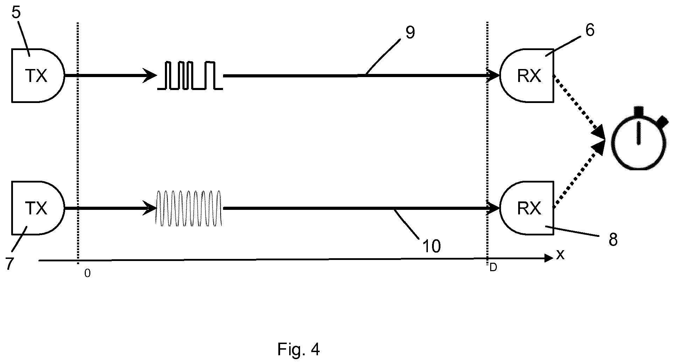

Wie in dem Übertragungsschema der Fig. 4 gezeigt, sendet der optische Sender 5 beim Einschalten der Leuchte ein Signal 9 aus, das zugleich eine Befehlsinformation trägt. Gleichzeitig sendet der Ultraschallsender 7 einen Ultraschallimpuls ("Ping") 10 aus. Alle anderen Leuchten des Beleuchtungssystems empfangen das optische Signal und den Ultraschallimpuls, und zwar wegen des Unterschieds zwischen Licht- und Schallgeschwindigkeit mit einer zeitlichen Verzögerung, die von der Distanz der einzelnen Leuchten von der sendenden Leuchte abhängt. Diese zeitliche Verzögerung wird im Kommunikationsmodul jeder Leuchte gemessen Symbolisiert durch eine Stoppuhr 11 und in die Distanzinformation umgesetzt.

Diejenigen Leuchten, die sich innerhalb einer festgelegten Distanz befinden werden eingeschaltet oder generell deren Beleuchtungssituation verändert. Es gibt dafür unterschiedliche Konzepte:
(a) Es werden alle innerhalb einer definierten Entfernung um die auslösende Leuchte (Trigger - Licht-EIN) herum befindlichen Leuchten, auf eine vorbestimmte Helligkeit (z.B. 50%) und oder Lichtfarbe (z.B. 3000K) eingeschaltet. Leuchten ausserhalb des Empfangsbereichs reagieren nicht auf diesen Befehl. Es handelt sich somit um eine Art Gruppensteuerung. Einzelne Leuchten können auch von verschiedenen Sendern Signale empfangen. In diesem Fall bestimmt die Anwendung (Auswertung der Befehlssignale), wie sich die Leuchte verhalten soll.
(b) Die einzustellende Helligkeit der benachbarten Leuchten soll mit grösser werdender Entfernung zur auslösenden Leuchte (Trigger - Licht-EIN) abnehmen bzw. die Lichtfarbe sich verändern. Die empfangenden Leuchten reagieren nicht nur auf den Einschaltbefehl (z. B. Licht-EIN), sondern stellen auch noch die Helligkeit und/oder Lichtfarbe ihres Leuchtmittels in Abhängigkeit von der Entfernung zum Sender ein. Dadurch wird eine um die sendende Leuchte auslaufende Helligkeitsverteilung und/oder Lichtfarbenveränderung (Wohlbefindlichkeit) im Raum erreicht.
(c) Alle im Raum befindlichen Leuchten werden auf ein bestimmtes Helligkeitsniveau und/oder eine Lichtfarbe eingestellt, d. h. über eine bestimmte ausgewählte Leuchte (Master-Leuchte) oder ein zusätzliches Modul (Bedienelement) wird der Einschaltbefehl ausgelöst. Im Falle eines zusätzlichen Moduls kann dies auch ein Gateway an ein Gebäudeleit- oder Fernwartungssystem bedeuten.
   Bei den beiden Anwendungsformen (a) und (b) gibt es grundsätzlich keine Master-Leuchte. Jede Leuchte kann Befehle/Daten ans alle Leuchten im Raum übermitteln.
(d) Eine Erweiterung des räumlichen Steuerbereichs kann erreicht werden, indem jedes Sende/Empfangsmodul einer Leuchte zusätzlich als Relaisstation agieren kann. Befehlssignale, welche z.B. an alle Leuchten gesendet werden sollen, werden von jeder Leuchte (nebst der Auswertung für sich selbst) wieder weitergegeben (Verstärkung - Routing). Auf diese Weise kann die Kommunikation zwischen den Leuchten eines Beleuchtungssystems auch um Hindernisse herum stattfinden. Durch das verwendete Verfahren der Distanzmessung zusammen mit der Routingfähigkeit ist jede Leuchte in der Lage, die Distanzen zu allen Leuchten im Raum zu detektieren. Aus diesen Informationen kann sich jede Leuchte eine grobe Karte mit den Positionen aller Leuchten im Raum erstellen. Somit kann eine Lichtsteuerungsaufgabe, welche von den Standorten der Leuchten zueinander abhängt, einfach realisiert werden, ohne dass jede Leuchte in einer Form (z.B. durch Adressierung) speziell konfiguriert werden müsste. Eine Veränderung des Standortes oder der Austausch einer beteiligten Leuchte im Raum wird durch jede Leuchte erkannt und die Distanzen werden automatisch neu vermessen.

## Patentansprüche

1. Steuerungssystem für ein Beleuchtungssystem mit einer Vielzahl von mobilen Leuchten (2, 2') beziehungsweise fest installierten Leuchten (2, 2'), bei denen eine Zusatzverdrahtung für Steueraufgaben nicht vorhanden ist, wobei sich die mobilen Leuchten (2, 2') beziehungsweise fest installierten Leuchten (2, 2') in einer räumlichen Zuordnung zueinander befinden, wobei das Steuerungssystem eine Vielzahl von Kommunikationsmodulen (3) mit jeweils einer Sende- und Empfangseinrichtung (4) umfasst, wobei jede der Leuchten (2, 2') des Beleuchtungssystems mit einem der Kommunikationsmodule (3) versehen ist, wobei mittels der Sendeeinrichtung (5, 7) des Kommunikationsmoduls (3) einer der Leuchten (2, 2') beim Einschalten Signale aussendbar sind, aufgrund deren die Empfangseinrichtungen (6, 8) der Kommunikationsmodule (3) der anderen der Leuchten (2, 2') des Beleuchtungssystems jeweils ihre Entfernung von der eingeschalteten Leuchte (2, 2') ermittelbar ist und die anderen der Leuchten (2, 2') mit einer von der jeweils ermittelten Entfernung abhängigen Helligkeit und/oder Farbtemperatur einschaltbar sind, **dadurch gekennzeichnet, dass** die von der Sendeeinrichtung (5, 7) ausgesendeten Signale ein optisches Signal und einen Ultraschallimpuls umfassen, die gleichzeitig aussendbar sind und mittels des Kommunikationsmoduls (3) der empfangenden Leuchten (2, 2') aus der Empfangsverzögerung zwischen dem optischen Signal und dem Ultraschallimpuls aufgrund der unterschiedlichen Laufzeiten die Entfernung von der sendenden Leuchte (2, 2') ermittelbar ist.

2. Steuerungssystem nach Anspruch 1, **dadurch gekennzeichnet, dass** das optische Signal ein Infrarot-Signal ist.

3. Steuerungssystem nach einem der Ansprüche 1 oder 2, **dadurch gekennzeichnet, dass** das optische Signal ein Ultraviolett-Signal ist.

4. Steuerungssystem nach einem der vorstehenden Ansprüche, **dadurch gekennzeichnet, dass** das optische Signal ein Signal im sichtbaren Licht ist.

## Claims

1. A control system for a lighting system having a plurality of movable lamps (2, 2') or fixedly installed lamps (2, 2'), with which there is no additional wiring provided for control tasks, wherein the movable lamps (2, 2') or fixedly installed lamps (2, 2') are in a mutual spatial association, wherein the control system comprises a plurality of communication modules (3) each having a transmitting and receiving device (4), wherein each of the lamps (2, 2') of the lighting system is provided with one of the communication modules (3), wherein, when the power is turned on, it is possible, by means of the transmitting device (5, 7) of the communication module (3) of one of the lamps (2, 2'), to emit signals on the basis of which the receiving devices (6, 8) of the communication modules (3) of the others of the lamps (2,2') of the lighting system are each able to establish the removal thereof from the switched-on lamp (2, 2') and the others of the lamps (2, 2') can be switched on with a luminance and/or color temperature dependent on the respectively-established removal, **characterized in that**: the signals emitted from the transmitting device (5, 7) comprise an optical signal and an ultrasonic pulse that can be emitted simultaneously, the removal of the emitting lamp (2, 2') can be established by means of the communication module (3) of the receiving lamps (2, 2') from the receiving delay between the optical signal and the ultrasonic pulse, on the basis of the different run times.

2. The control system according to claim 1, **characterized in that** the optical signal is an infrared signal.

3. The control system according to either claim 1 or 2, **characterized in that** the optical signal is an ultraviolet signal.

4. The control system according to any of the preceding claims, **characterized in that** the optical signal is a signal in visible light.

## Revendications

1. Système de commande pour un système d'éclairage comprenant une pluralité de lampes mobiles (2, 2') ou de lampes installées fixes (2, 2'), dans lequel il n'y a pas de câblage d'appoint à des fins de commande, dans lequel les lampes mobiles (2, 2') ou les lampes installées fixes (2, 2') se trouvent dans une certaine affectation spatiale mutuelle, dans lequel le système de commande comprend une pluralité de modules de communication (3) avec respectivement un dispositif d'émission et de réception (4), dans lequel chacune des lampes (2, 2') du système d'éclairage est pourvue d'un des modules de communication (3), dans lequel, au moyen du dispositif d'émission (5, 7) du module de communication (3) de l'une des lampes (2, 2'), on peut émettre par commutation des signaux sur la base desquels les dispositifs de réception (6, 8) des modules de communication (3) de l'autre des lampes (2, 2') du système d'éclairage peuvent respectivement déterminer leur éloignement de la lampe commutée (2, 2') et l'autre des lampes (2, 2') peut être commutée avec l'une ou l'autre de la luminosité et/ou de la température de couleur qui est respectivement fonction de la distance déterminée, **caractérisé en ce que** les signaux émis par le disposition d'émission (5, 7) comprennent un signal optique et une impulsion ultrasonore, qui peuvent être émis simultanément et, au moyen du module de communication (3) des lampes de réception (2, 2'), on peut, à partir du retard de réception entre le signal optique et l'impulsion ultrasonore sur la base des différentes durées de propagation, la distance de la lampe d'émission (2, 2').

2. Système de commande selon la revendication 1, **caractérisé en ce que** le signal optique est un signal infrarouge.

3. Système de commande selon l'une quelconque des revendications 1 ou 2, **caractérisé en ce que** le signal optique est un signal ultraviolet.

4. Système de commande selon l'une quelconque des revendications précédentes, **caractérisé en ce que** le signal optique est un signal de lumière visible.
